# EUROPÄISCHE PATENTANMELDUNG

(11) **EP 3 026 391 A1**
(43) Veröffentlichungstag der Anmeldung: **01.06.2016**
(21) Anmeldenummer: 14194614.5
(22) Anmeldetag: 25.11.2014
(51) Int. Cl.: G01B 11/06, G01N 21/84, G01N 21/359

(54) **Verfahren zur Bestimmung der Menge einer auf einer Trägerplatte aufgetragenen Schicht, insbesondere einer Grundierungsschicht**

(71) Anmelder: Flooring Technologies Ltd., Pieta PTA 9044 (MT)
(72) Erfinder: Kalwa, Norbert, 32805 Horn-Bad Meinberg (DE); Denk, Andre, 16909 Wittstock/Dosse (DE)
(74) Vertreter: Maikowski & Ninnemann

(57) **Zusammenfassung**

Die vorliegende Erfindung betrifft ein Verfahren zur Bestimmung der Menge einer auf mindestens einer Trägerplatte aufgetragenen pigmentierten Schicht umfassend die Schritte: Aufnehmen von mindestens einem NIR-Spektrum der auf der mindestens einen Trägerplatte aufgetragenen pigmentierten Schicht unter Verwendung von mindestens einem NIR-Detektor in einem Wellenlängenbereich zwischen 500 nm und 2500 nm, bevorzugt zwischen 700 nm und 2000 nm, insbesondere bevorzugt zwischen 900nm und 1700 nm; Bestimmen der Auftragsmenge der pigmentierten Schicht durch Vergleich des für die zu vermessende Auftragsmenge der pigmentierten Schicht ermittelten NIR-Spektrums mit mindestens einem für mindestens eine Referenzprobe mit bekannter Auftragsmenge an pigmentierter Schicht ermittelten NIR-Spektrums mittels einer multivariaten Datenanalyse (MDA), wobei das mindestens eine für die mindestens eine Referenzprobe ermittelte NIR-Spektrum mit bekannter Auftragsmenge an pigmentierter Schicht unter Verwendung desselben NIR-Detektors in einem Wellenlängenbereich zwischen 500 nm und 2500 nm, bevorzugt zwischen 700 nm und 2000 nm, insbesondere bevorzugt zwischen 900 nm und 1700 nm vorher bestimmt wurde.

## Beschreibung

Die vorliegende Erfindung betrifft ein Verfahren zur Bestimmung der Menge einer auf mindestens einer Trägerplatte aufgetragenen pigmentierten Schicht nach dem Oberbegriff des Anspruchs 1, die Verwendung eines NIR(Nahinfrarot)-Detektors zur Bestimmung der Menge einer auf einer Trägerplatte aufgetragenen pigmentierten Schicht nach Anspruch 13 und eine Vorrichtung zur Durchführung des Verfahrens nach Anspruch 14.

### Beschreibung

Holzwerkstoffplatten als Trägermaterialien werden in den verschiedensten Bereichen eingesetzt und sind weit verbreitet. So sind Holzwerkstoffplatten unter anderem aus der Verwendung als Fußbodenpaneele, zum Beispiel in Form von Laminatböden, als Dämmstoffplatten für den Innen- und Außenbereich oder auch als Wandpaneele bekannt. Derartige Werkstoffplatten werden üblicherweise aus Holzfasern, Holzspänen oder Strands hergestellt. Im Falle von Laminatböden werden zum Beispiel aus Holzfasern hergestellte HDF-Platten (HDF = Faserplatte mit erhöhter Rohdichte) mit vielfältigen Dekoren-verwendet.

Zur Dekorierung der Holzwerkstoffplatten gibt es mehrere Ansätze. So besteht eine Möglichkeit in der Beschichtung von Holzwerkstoffplatten mit einem Dekorpapier, wobei der Vielfältigkeit an verschiedengemusterten Dekorpapieren keine Grenzen gesetzt sind.

Als Alternative zur Verwendung von Dekorpapieren auf Holzwerkstoffplatten entwickelt sich zunehmend die Möglichkeit des direkten Bedruckens von Holzwerkstoffplatten, wobei ein Bedrucken von Papier und dessen nachträgliches Kaschieren oder Direktbeschichten auf die Holzwerkstoffplatten entfällt. Die hierbei hauptsächlich zum Einsatz kommenden Drucktechniken sind das Tiefdruck- und das Digitaldruckverfahren. Das Tiefdruckverfahren ist eine Drucktechnik, bei der die abzubildenden Elemente als Vertiefungen in einer Druckform z.B. einer Druckwalze vorliegen, die vor dem Druck eingefärbt wird. Der Digitaldruck ermöglicht die Herstellung eines Druckbildes mit besonders hoher Qualität durch eine höhere Auflösung und erlaubt des Weiteren ein breiteres Anwendungsspektrum bei hoher Flexibilität.

Eine Voraussetzung für die Anwendung der genannten Drucktechniken auf Trägerplatten ist eine vorbereitende Bearbeitung der Oberfläche der Trägerplatten. Hierfür wird die Oberfläche der Trägerplatte typischerweise zunächst geschliffen, ggf. mit einem Walzgrund und einer sich daran anschließenden Grundierungsschicht versehen. Die Grundierungsschicht ist in der Regel eine farbdeckende Schicht, die einen farblich einheitlichen Untergrund für das aufzudruckende Dekor bildet. Auf die Dekorschicht kann zusätzlich eine flüssige Schutz- oder Verschleißschicht aufgetragen werden.

Bei der Produktion von Platten mit solch einem Flüssigaufbau ist ein entscheidendes Kriterium zur Qualitätssicherung die Ermittlung der Auftragsmengen der Grundierungsschicht als pigmentierter Schicht.

Ein gängiges Verfahren zur Bestimmung von Auftragsmengen ist das Auswiegen. Dabei wird das Trägermaterial mit dem Beschichtungsmedium im Auftragsaggregat beschichtet und anschließend durch Bestimmung der Wiegedifferenz die Auftragsmenge bestimmt. Dieses Verfahren ist aber zeitlich sehr aufwändig und liefert auch nur Einzelwerte, die noch nicht einmal eine Aussage für die gesamte Produktionsbreite zulassen. Sogenannte Wiegebretter sind üblicherweise nur etwa 50x50 cm groß, die Produktionsbreite in einer Druckstrasse o. Ä. liegt üblicherweise mindestens bei 1,3 m bzw. meist sogar bei 2,07 m. Um nun eine Aussage über die gesamte Produktionsbreite machen zu können, müssten mindestens drei Wiegebretter zum Einsatz gebracht werden.

Besonders nachteilig ist, dass dieses Verfahren nur Einzelwerte bei einer "stehender Anlage", liefert, was nicht sicher die Verhältnisse in der realen Produktion wiederspiegelt. Bei laufender Anlage ist durch die permanente Abnahme und Nachdosierung in Vorrats- und Auftragsbehälter ein steter Materialfluss gegeben, der Erwärmung und oder Viskositätsänderungen der Auftragsmedien vermeidet. Diese Mängel des Auswiegens sind umso schwerwiegender, je weniger Material pro m² aufgetragen werden. Selbstverständlich sind auch die Probleme, die ein nicht gleichmäßiger oder nicht den Anforderungen entsprechender Auftrag verursacht, größer.

Da es sich bei dem Trägermaterial im vorliegenden Fall vorwiegend um Holzwerkstoffe, insbesondere mittel- oder hochdichte Faserplatten handelt, können keine Verfahren eingesetzt werden, die z. B. bei der Imprägnierung von Papieren verwendet werden. So können für Papiere bekannte Verfahren (IR-Strahlung) nicht verwendet werden, da keine Durchstrahlung der Warenbahn möglich ist. Andere Technologien wie Röntgenfluoreszenz setzen erhöhte Sicherheitsstandards bezüglich Strahlenschutz voraus (Strahlenschutzbeauftragter usw.). Bei der Grundierung von Holzwerkstoff-Platten (HWS-Platten) werden zur Eliminierung der Grundfarbe der Trägerplatte üblicherweise pigmentierte Schichten aufgetragen. Diese sollen zwar einerseits eine möglichst gleichmäßige Grundierung erzeugen, dürfen aber andererseits aus technologischen Gründen nicht zu dick sein. Außerdem sind hochpigmentierte Grundierungen (mit Titandioxid) auch teuer. Aus diesem Grund werden insgesamt nur ca. 20 - 70 g Grundierung (fl.)/m² aufgetragen, wobei sich der Auftrag auf mehrere Walzenauftragsmaschinen mit Zwischentrocknung verteilt.

Der vorliegenden Erfindung liegt daher die technische Aufgabe zugrunde, ein einfaches aber effizientes Verfahren bereitzustellen, mit welchem die Auftragsmenge einer auf eine Trägerplatte aufzutragenden pigmentierten Schicht hinreichend genau bestimmt werden kann. Dadurch sollten Qualitätsmängel, die der Auftragsmenge zugeordnet werden können, reduziert oder beseitigt werden können. Zudem sollte das Verfahren keine erhöhten Sicherheitsstandards an die Anlagentechnik erfordern und eine möglichst geringe Fehleranfälligkeit aufweisen.

Die gestellte Aufgabe wird erfindungsgemäß durch ein Verfahren mit den Merkmalen des Anspruchs 1 gelöst.

Demnach wird ein Verfahren zur Bestimmung der Menge einer auf mindestens einer Trägerplatte aufgetragenen pigmentierten Schicht, wie z.B. einer Grundierungsschicht bereitgestellt. Das vorliegende Verfahren umfasst die Schritte:
- Aufnehmen von mindestens einem NIR-Spektrum der auf der mindestens einen Trägerplatte aufgetragenen pigmentierten Schicht unter Verwendung von mindestens einem NIR-Detektor in einem Wellenlängenbereich zwischen 500 nm und 2500 nm, bevorzugt zwischen 700 nm und 2000 nm, insbesondere bevorzugt zwischen 900nm und 1700 nm;
- Bestimmen der Auftragsmenge der pigmentierten Schicht durch Vergleich des für die zu vermessende Auftragsmenge der pigmentierten Schicht ermittelten NIR-Spektrums mit mindestens einem für mindestens eine Referenzprobe mit bekannter Auftragsmenge an pigmentierter Schicht ermittelten NIR-Spektrums mittels einer multivariaten Datenanalyse (MDA),
- wobei das mindestens eine für die mindestens eine Referenzprobe ermittelte NIR-Spektrum mit bekannter Auftragsmenge an pigmentierter Schicht unter Verwendung desselben NIR-Detektors in einem Wellenlängenbereich zwischen 500 nm und 2500 nm, bevorzugt zwischen 700 nm und 2000 nm, insbesondere bevorzugt zwischen 900 nm und 1700 nm vorher bestimmt wurde.

Das vorliegende Verfahren ermöglicht demnach die Bestimmung der Auftragsmenge einer auf die Trägerplatte aufgetragenen pigmentierten Schicht wie z.B. einer Grundierungsschicht. Unter Verwendung des NIR-Detektors wird mit Hilfe von NIR-Strahlung ein NIR-Spektrum der auf die Trägerplatte aufgetragenen pigmentierten Schicht erzeugt, das für die verschiedenen Inhaltsstoffe der aufgetragenen Schicht je nach Konzentration ein NIR-Spektrum mit spezifischen Peaks erzeugt. Dabei wird das NIR-Signal in die Probe eingestrahlt, am Träger wieder reflektiert und am Messkopf detektiert. Bei dieser Messung werden in wenigen zehntel Sekunden mehrere Hundert NIR-Messungen durchgeführt, sodass auch eine statistische Absicherung der Werte gewährleistet wird.

Das vorliegende Verfahren zur Bestimmung der Auftragsmenge einer pigmentierten Schicht auf einer Trägerplatte unter Verwendung eines NIR-Detektors nutzt den Umstand aus, dass die NIR-Strahlung nicht durch die gesamte Werkstoffplatte, das heißt, durch pigmentierte Schicht und Trägerplatte, hindurch dringt, sondern an der Oberfläche der Werkstoffplatte reflektiert wird. Die NIR-Strahlung dringt demnach im vorliegenden Verfahren lediglich und ausschließlich durch die pigmentierte Schicht z.B. Grundierungsschicht durch und wird von der Oberfläche der Holzwerkstoffplatte reflektiert. Die reflektierte NIR-Strahlung wird von dem NIR-Detektor erfasst und das ermittelte NIR-Spektrum wird zur Bestimmung der Auftragsmenge verwendet.

Ein für eine pigmentierte Schicht wie z.B. eine Grundierungsschicht ermitteltes NIR-Spektrum weist eine deutliche breite Absorptionsbande mit einem Absorptionsmaximum bei ca. 1495 nm auf. Diese Bande entspricht der ersten Oberschwingung von N-H-Gruppen. Bei ca. 1450 nm ist eine erste Oberschwingung des Wassers erkennbar. Des Weiteren weist das Spektrum eine weitere Absorptionsbande bei ca. 1575 nm auf, die einer ersten Oberschwingung der Peptidbindung (-CONH-) des häufig in einer Grundierungsschicht verwendeten Kaseins entspricht. Wegen der Überlappung der drei genannten Absorptionsbanden erscheint die Wasserbande als linke Schulter und die Peptidbande als rechte Schulter der breiten Bande.

Ein Vergleich und die Interpretation der NIR-Spektren erfolgt sinnvollerweise über den gesamten aufgenommenen Spektralbereich. Dies wird mit der multivariaten Datenanalyse MDA durchgeführt. Bei multivariaten Analysemethoden werden typischerweise mehrere statistische Variablen zugleich untersucht. Hierzu wird die in einem Datensatz enthaltene Zahl von Variablen reduziert, ohne gleichzeitig die darin enthaltene Information zu mindern.

Im vorliegenden Fall erfolgt die multivariate Datenanalyse über das Verfahren der Partial Least Squares (PLS) Regression, wodurch ein geeignetes Kalibrationsmodell erstellt werden kann. Die Auswertung der gewonnenen Daten wird bevorzugt mit einer geeigneten Analysesoftware vorgenommen wie z.B. mit der Analysesoftware SIMCA-P der Firma Umetrics AB oder The Unscrambler der Firma CAMO.

In einer Ausführungsform des vorliegenden Verfahrens umfasst die mindestens eine zu vermessende pigmentierte Schicht eine Grundierungsschicht. Die Anwendung des vorliegenden Verfahrens zur Bestimmung der Auftragsmenge einer weißen Grundierungsschicht ist besonders bevorzugt.

Die zu vermessende Grundierungsschicht umfasst eine Zusammensetzung aus Kasein als Bindemittel und anorganischen Pigmenten, insbesondere anorganischen Farbpigmenten. Als Farbpigmente können weiße Pigmente wie Titandioxid TiO₂ verwendet werden. Weitere Farbpigmente können Calciumcarbonat, Bariumsulfat oder Bariumcarbonat sein. Die Grundierung enthält neben dem Farbpigmenten wie Titandioxid und Kasein noch Wasser als Lösemittel.

In einer weiteren Ausführungsform des vorliegenden Verfahrens beträgt die Gesamtmenge der aufgetragenen pigmentierten Schicht, insbesondere in Form eines Flüssigauftrages, zwischen 5 und 200 g/m², bevorzugt zwischen 20 und 150 g/m², insbesondere bevorzugt zwischen 30 und 100 g/m².

Es ist ebenfalls bevorzugt, wenn die zu vermessende pigmentierte Schicht wie z.B. Grundierungsschicht aus mindestens einer, bevorzugt aus mindestens zwei, insbesondere bevorzugt aus mindestens vier nacheinander aufgetragenen Lagen bzw. Aufträgen besteht, wobei die Auftragsmenge zwischen den Lagen bzw. Aufträgen gleich oder verschieden ist, d.h. die Auftragsmenge einer jeden einzelnen Lagen kann variieren. So kann die Auftragsmenge einer Lage bzw. eines Auftrages zwischen 1 bis 50 g/m², bevorzugt zwischen 2 bis 30 g/m², insbesondere bevorzugt zwischen 5 und 15 g/m² betragen.

In einer Variante des vorliegenden Verfahrens ist die mindestens eine Trägerplatte eine Holzwerkstoffplatte, insbesondere eine mitteldichte Faser (MDF)-, hochdichte Faser (HDF)-oder Grobspan (OSB)- oder Sperrholzplatte, eine Zementfaserplatte und/oder Gipsfaserplatte, eine Magnesiumoxid-Platte, eine Holz-Kunststoff-Platte und/oder eine Kunststoffplatte.

In einer weiteren Ausführungsform wird das vorliegende Verfahren zur Bestimmung der Menge einer Grundierungsschicht auf einer Trägerplatte mit dem Schichtaufbau: Trägerplatte, mindestens eine Harzschicht und mindestens eine Lage Grundierungsschicht verwendet. Hierbei wird vor dem Auftrag der mindestens einen Grundierungsschicht mindestens eine Harzschicht auf die Trägerplatte aufgetragen. Diese Harzschicht wird auch als Walzgrund bezeichnet, und dient der Verbesserung der Haftung der Grundierungsschicht auf der Trägerplatte. Der Walzgrund umfasst bevorzugt ein Formaldehyd-Harz, wie ein Melamin-Formaldehyd-Harz, Melamin-Harnstoff-Formaldehyd-Harz oder Harnstoff-Formaldehyd-Harz.

Es ist bevorzugt, wenn die zu verwendende Referenzprobe mit bekannter Auftragsmenge einer pigmentierten Schicht z.B. einer Grundierungsschicht, eine auf einer Trägerplatte aufgetragene pigmentierte Schicht z.B. Grundierungsschicht umfasst, wobei Trägerplatte und pigmentierte Schicht der Referenzprobe gleichartig zu der zu vermessenden Probe aus Trägerplatte und pigmentierter Schicht sind. Mit anderen Worten, die aufgetragene Schicht der Referenzprobe ist hinsichtlich der Zusammensetzung und Auftragsmenge gleich der zu vermessenden Schicht.

Soll z.B. eine Referenzprobe für die Bestimmung der Auftragsmenge einer Grundierungsschicht erstellt werden, kann dies mit den folgenden Schritten durchgeführt werden:
a) Auswiegen von mindestens einer unbeschichteten Trägerplatte;
b) ggf. Auftragen einer Harzschicht (Walzgrund) auf die Trägerplatte;
c) Auftragen einer ersten vorbestimmten Menge einer ersten Lage bzw. eines ersten Auftrages der Grundierungsschicht auf die Trägerplatte;
d) Trocknen der aufgetragenen ersten Lage der Grundierungsschicht;
e) Aufnehmen eines ersten NIR-Spektrums, welches zu der vorbestimmten Menge der ersten Lage der Grundierungsschicht korrespondiert;
f) Auftragen einer zweiten vorbestimmten Menge einer zweiten Lage bzw. eines zweiten Auftrages der Grundierungsschicht auf die erste Lage der Grundierungsschicht;
g) Trocknen der aufgetragenen zweiten Lage der Grundierungsschicht;
h) Aufnehmen eines zweiten NIR-Spektrums, welches zu der vorbestimmten Menge an erster und zweiter Lage der Grundierungsschicht korrespondiert; und
i) Wiederholung der Schritte f) bis h) bis eine vorbestimmte Gesamtmenge der Grundierungsschicht erreicht ist

In einer weiteren Variante des vorliegenden Verfahrens erfolgt die Bestimmung der Menge der auf die Trägerplatte aufgetragenen pigmentierten Schicht nach dem Auftragen derselbigen und einem anschließenden Trocknungsschritt in einem Trocknersegment unter Verwendung des mindestens einen NIR-Detektors.

In einer Variante des vorliegenden Verfahrens wird die Auftragsmenge einer pigmentierten Schicht z.B. einer Grundierungsschicht nach dem Auftragen der Schicht zum Beispiel mittels einer oder mehrerer Walzen auf die Trägerplatte und einem anschließenden Trocknungsschritt in einem Trocknersegment, zum Beispiel in einem Konvektionstrockner, IR- und/oder NIR-Trockner, unter Verwendung des mindestens einen NIR-Detektors durchgeführt. Entsprechend ist mindestens ein NIR-Detektor in einer Fertigungslinie von Werkstoffplatten in Verarbeitungsrichtung hinter einer Auftragsvorrichtung und einer Trocknungsvorrichtung angeordnet.

Es kann auch vorgesehen sein, dass der mindestens eine NIR-Detektor sich quer zur Laufrichtung der mit der pigmentierten Schicht z.B. der Grundierungsschicht versehenen Trägerplatten bewegt. Der NIR-Detektor kann an beliebigen Stellen in Transportrichtung der Platte nach den Auftragswerken installiert werden. Dabei kann der Detektor auch über die Plattenbreite traversieren bzw. bestimmte Problembereiche analysieren (z. B. Minderaufträge im Rand- oder Mittelbereich der Platten usw.). Außerdem stehen die Messwerte sofort zur Verfügung und erlauben einen sofortigen Eingriff in den Prozess. Dies ist bei anderen Verfahren nicht ohne weiteres möglich.

Das vorliegende Verfahren zur Bestimmung der Auftragsmenge einer auf einer Trägerplatte aufgetragenen pigmentierten Schicht wie z.B. Grundierungsschicht weist mehrere Vorteile auf. So ermöglicht das Verfahren eine zerstörungsfreie kontinuierliche Messung der Auftragsmenge in der Oberfläche (Online-Messung). Des Weiteren kann das Verfahren in einem automatisch geregelten System mit Alarmmeldung durchgeführt werden und es können Schichtaufträge von 5 bis 200 g/m² vermessen werden.

Vorliegend kann in einer weiteren Ausführungsform im Falle des Auftrages einer Grundierungsschicht auf die Trägerplatte anschließend auf die selbige eine Primerschicht (z.B. UV- oder ESH-Spachtel) gefolgt von einer Dekorschicht z.B. in Form eines Druckdekors aufgetragen werden.

Im Falle eines Druckdekors kann eine wasserbasierte pigmentierte Druckfarbe im Tiefdruckverfahren oder im Digitaldruckverfahren aufgetragen werden. Diese wasserbasierte pigmentierte Druckfarbe kann auch in mehr als einer Schicht aufgetragen werden, zum Beispiel 3 bis 10 Schichten, bevorzugt 5 bis 8 Schichten, wobei nach jedem Schichtauftrag die Druckfarbe zum Beispiel in einem Konvektionstrockner oder einem NIR-Trockner getrocknet werden kann.

Das vorliegende Verfahren zur Bestimmung der Auftragsmenge einer auf eine Trägerplatte aufgetragenen pigmentierten Schicht wie z.B. einer Grundierungsschicht wird in einer Vorrichtung bzw. Fertigungslinie zur Herstellung von Werkstoffplatten durchgeführt, die mindestens eine Vorrichtung zum Auftragen einer pigmentierten Schicht wie z.B. einer Grundierungsschicht auf eine Trägerplatte, mindestens eine Vorrichtung zum Trocknen der Schicht, und mindestens einen NIR-Detektor zur Durchführung des erfindungsgemäßen Verfahrens umfasst, wobei der mindestens eine NIR-Detektor in Verarbeitungsrichtung nach der Auftragsvorrichtung und der Trocknungsvorrichtung angeordnet ist.

Der mindestens eine NIR-Detektor ist demnach in einer Fertigungslinie der mindestens einen Werkstoffplatte umfassend mindestens eine Auftragsvorrichtung für die aufzutragende Schicht, wie z.B. eine Walze, Sprühvorrichtung oder Gießvorrichtung, und mindestens eine Trocknungsvorrichtung, z.B. in Form eines Konvektionstrockner, IR- und/oder NIR-Trockner, angeordnet.

In einer Variante umfasst die vorliegende Vorrichtung eine Vorrichtung zum Auftragen einer Harzschicht (Walzgrund) auf eine Trägerplatte und eine Vorrichtung zum Trocknen der Harzschicht, wobei beide Vorrichtungen in Verarbeitungsrichtung vor der Vorrichtung zum Auftragen der pigmentierten Schicht wie z.B. einer Grundierungsschicht angeordnet sind.

Es ist denkbar, dass die Vorrichtung bzw. Fertigungslinie zur Herstellung der Werkstoffplatten mehr als eine Auftragsvorrichtung und mehr als eine Trocknungsvorrichtung umfasst, wobei mindesten ein NIR-Detektor in Verarbeitungsrichtung jeweils nach einer Auftragsvorrichtung und einer Trocknungsvorrichtung angeordnet ist.

In einer bevorzugten Ausführungsform sieht der Aufbau einer Fertigungslinie wie folgt aus:
a) optional mindestens eine Schleifmaschine zum Schleifen der Oberfläche von mindestens einer Trägerplatte und mindestens einen in Verarbeitungsrichtung hinter der Schleifmaschine angeordnetes IR-Aggregat (wobei das IR-Aggregat insbesondere einer Erzeugung einer vorbestimmten Mindestoberflächentemperatur und Vergleichmäßigung der Oberflächentemperatur dient);
b) eine erste Auftragsvorrichtung zum Auftragen von mindestens einer ersten Harzschicht (Walzgrund) auf die Trägerplatte;
c) eine in einer Verarbeitungsrichtung hinter der ersten Auftragsvorrichtung angeordnete erste Trocknungsvorrichtung (z.B. Konvektionstrockner) zum Trocknen der mindestens einen ersten Harzschicht (Walzgrund);
d) eine in Verarbeitungsrichtung hinter der ersten Trocknungsvorrichtung angeordnete zweite Auftragsvorrichtung zum Auftragen von mindestens einer Grundierungsschicht auf die Trägerplatte, wobei die zweite Auftragsvorrichtung mindesten eine, bevorzugt zwei, insbesondere bevorzugt vier Auftragswerke umfasst;
e) eine in einer Verarbeitungsrichtung hinter der zweiten Auftragsvorrichtung angeordnete zweite Trocknungsvorrichtung (z.B. Konvektionstrockner) zum Trocknen der mindestens einen Grundierungsschicht;
f) einen in Verarbeitungsrichtung hinter der zweiten Trocknungsvorrichtung angeordneten NIR-Detektor zur Bestimmung der Menge an aufgetragener Grundierungsschicht;
g) eine in Verarbeitungsrichtung hinter dem NIR-Detektor angeordnete dritte Auftragsvorrichtung zum Auftragen von mindestens einer Primerschicht auf die Trägerplatte,
h) eine in Verarbeitungsrichtung hinter der dritten Auftragsvorrichtung angeordnete dritte Trocknungsvorrichtung (z.B. Konvektionstrockner) zum Trocknen der mindestens einen Primerschicht;
i) eine in Verarbeitungsrichtung hinter der dritten Trocknungsvorrichtung angeordnete vierte Auftragsvorrichtung zum Auftragen von mindestens einer Dekorschicht, wobei die vierte Auftragsvorrichtung mehrere Druckwalzen zum Tiefdruck (z.B. drei oder vier Druckwalzen) umfassen kann;
j) eine in Verarbeitungsrichtung hinter der vierten Auftragsvorrichtung angeordnete fünfte Auftragsvorrichtung zum Auftragen von mindestens einer Schutzschicht; und
k) eine in Verarbeitungsrichtung hinter der fünften Auftragsvorrichtung angeordnete vierte Trocknungsvorrichtung (z.B. Konvektionstrockner) zum Trocknen der mindestens einen Schutzschicht.

Die zum Einsatz kommenden Auftragsvorrichtungen sind bevorzugterweise Auftragswalzen, die ein Auftragen der Schichten auf die Oberseite der Holzwerkstoffplatte ermöglichen.

Je nach Anforderungen der Fertigungslinie ist es selbstverständlich möglich, die Anzahl der Auftragsvorrichtungen und Trocknungsvorrichtungen mit jeweiligem NIR-Detektorzu variieren. So ist es zum Beispiel vorstellbar und möglich, eine Fertigungslinie aus zwei Einheiten umfassend Auftragsvorrichtung, Trocknungsvorrichtung und NIR-Detektor zu verwenden oder auch mehr als zwei wie zum Beispiel drei, vier oder fünf Einheiten aus Auftragsvorrichtung, Trocknungsvorrichtung und NIR-Detektor einzusetzen. Dies ermöglicht die Bestimmung der Auftragsmenge von mehreren Grundierungsschichten.

Die Erfindung wird nachfolgend unter Bezugnahme auf die Figuren der Zeichnungen an einem Ausführungsbeispiel näher erläutert. Es zeigen:
- Figur 1: ein NIR-Spektrum einer auf einer Trägerplatte aufgetragenen Grundierungsschicht; und
- Figur 2: eine schematische Darstellung einer Fertigungslinie einer Werkstoffplatte unter Verwendung des erfindungsgemäßen Verfahrens.

### Erstellen einer Referenzprobe und Kalibrierung

Die Kalibrierung erfolgt durch Auswiegen von Proben bezüglich der Auftragsmenge bei gleichzeitiger Aufnahme eines Spektrums und wird wie folgt durchgeführt.

Eine 6 mm (7 mm, 8 mm oder 10 mm) dicke Platte, die eine vorgetrocknete Harzschicht (Walzgrund) aufweist, wird mit Grundierung mittels Auftragswalze von oben beschichtet. Die Bestimmung der Auftragsmenge erfolgt durch Auswiegen der HDF-Platte vor und nach dem Beschichten. Danach wird die Grundierung durch Heißlufttrockner bei 150 - 200 °C und ca. 7 Sekunden lang getrocknet und anschließend mit dem NIR-Spektrometer vermessen. Nach dem Vermessen erfolgt ein nächster Auftrag der Grundierung mit nachfolgender Trocknung und Vermessung der Beschichtung unter dem NIR-Spektrometer. Dieser Vorgang wird so oft wiederholt, bis die Gesamtmenge der Grundierung ca. 100 g/m² erreicht ist. Durch die Variation der Auftragsmenge kann eine Kalibrierung über einen weiten Bereich der Auftragsmenge erreicht werden.

Aus den Referenzspektren wird ein Kalibrationsmodell erstellt, welches zu Bestimmung der Auftragsmenge einer unbekannten Probe genutzt werden kann. Die Erstellung des Kalibrationsmodells erfolgt mittels multivariate Datenanalyse. Dies geschieht mit einer geeigneten Software z. B. mit der Analysesoftware The Unscrambler der Firma CAMO.

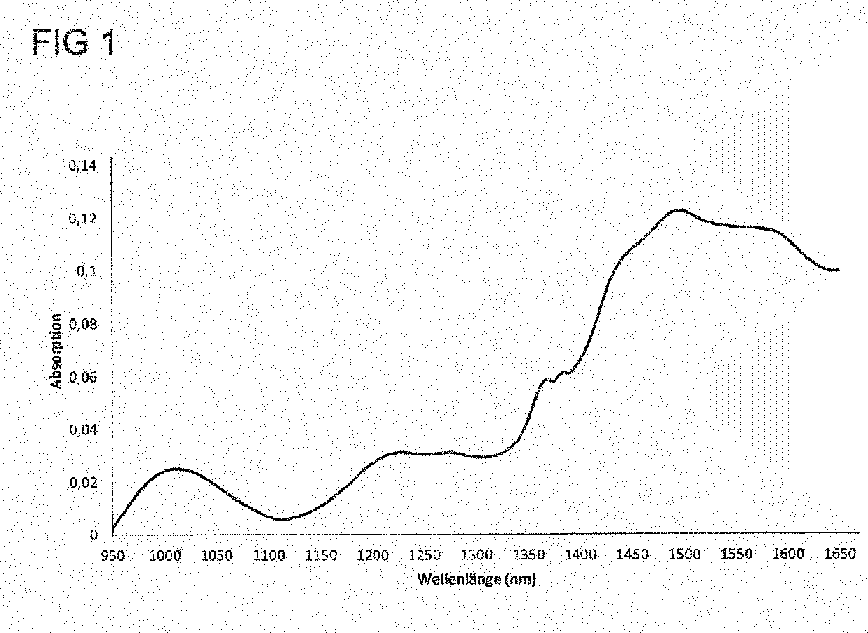

In Figur 1 ist ein für eine auf einer Trägerplatte aufgetragene Grundierungsschicht ermitteltes NIR-Spektrum gezeigt.

Das NIR-Spektrum wurde vorliegend in einem Wellenlängenbereich zwischen 900 und 1700 nm aufgenommen. Für die Aufnahmen der NIR-Spektren wurde ein NIR-Messgerät der Fa. Perten verwendet. Der Messkopf trägt die Bezeichnung DA 7400.

Das NIR-Spektrum weist eine deutliche breite Absorptionsbande mit einem Absorptionsmaximum bei ca. 1495 nm auf. Diese Bande entspricht der ersten Oberschwingung von N-H-Gruppen. Bei ca. 1450 nm ist eine erste Oberschwingung des Wassers erkennbar. Desweiteren weist das Spektrum eine weitere Absorptionsbande bei ca. 1575 nm auf, die einer ersten Oberschwingung der Peptidbindung (-CONH-) des in der Grundierung enthaltenden Kaseins entspricht. Wegen der Überlappung der drei genannten Absorptionsbanden erscheint die Wasserbande als linke Schulter und die Peptidbande als rechte Schulter der breiten Bande.

### Ausführungsbeispiel

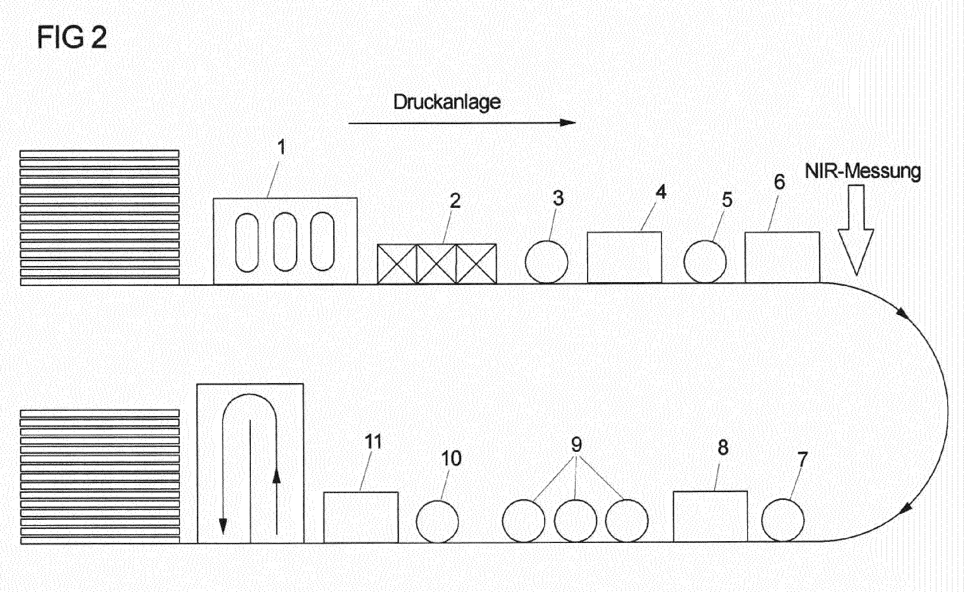

Das Messverfahren wird am Beispiel der Flächengewichtsbestimmung der Grundierung an einer Druckanlage, die in Figur 2 schematisch dargestellt ist, erläutert.

An der Druckanlage werden 2,07 m breite und 2,80 m lange HDF-Platten mit Plattendicke von 6 bis 12 mm mit bis zu 85 m/min verarbeitet. Zunächst werden die HDF-Rohplatten in einer Schleifmaschine 1 geschliffen. Nach dem Schleifen werden die Platten in einem IR-Trockner 2 auf eine Temperatur von ca. 45 °C vorgewärmt.

Danach erfolgt ein erster Harzauftrag (Walzgrund) im ersten Auftragswerk 3 mit anschließender Trocknung durch Heißluft in einem Konvektionstrockner 4. Als Beschichtungsharz dient ein wässriges Melamin-Formaldehyd-Harz mit einem Feststoffanteil von 60 Gew.-%.

Dann wird eine wasserhaltige, weiße Grundierung auf Basis von Kasein und anorganischen Pigmenten mit Hilfe von vier Auftragswerke 5 aufgetragen und durch Heißluft nach jedem Auftrag in einem Konvektionstrockner 6 getrocknet. Die einzelnen Auftragswerke 5 bringen unterschiedliche Mengen an Grundierung auf. Der Gesamtweißauftrag variiert je nach Druckanforderung zwischen 20 g/m² und 30 g/m².

Danach folgt ein Primerauftrag 7 mit anschließender Trocknung in einem weiteren Konvektionstrockner 8. Es schließt sich das Bedrucken 9 (Dekor) der Platten im indirekten Tiefdruck an. Nach dem Druck werden die Platten mit Melamin-Formaldehyd-Harz 10 (Schutzschicht) beschichtet und ebenfalls in einem Konvektionstrockner 11 getrocknet. Dann werden die Platten einige Tage zwischengelagert, bevor man sie weiterverarbeitet.

Der Prozess der Grundierung ist besonders wichtig, da er einen wesentlichen Einfluss auf die Farbdruckqualität der beschichteten HDF-Platten hat. Für einen bestimmten Farbmuster muss auch eine möglichst konstante Weißauftragsmenge gewährleistet werden, da es sonst zur unterschiedlichen Helligkeiten der Grundierung und somit auch zur unterschiedlichen Farbgebung innerhalb eines Farbmusters über mehreren Platten kommen kann.

Der Flächengewicht der Grundierung wird normalerweise durch Auswiegen der einzelnen Weißauftragswerke mit kleinen (50 cm x 50 cm) HDF-Platten (Wiegeplatten) bestimmt und wird von zwei Anlagenarbeitern durchgeführt. Das Auswiegen nimmt ca. 20 Minuten in Anspruch und wird mehrmals pro Tag durchgeführt. In dieser Zeit verliert die Anlage an Produktionsleistung, da bei der Auftragsmengen-Bestimmung keine normale Produktion stattfindet.

Unter Verwendung von NIR-Spektroskopie erfolgt die Messung der Weißauftragsmenge nach dem letzten Weißauftrag hinter dem Trockner 6 (Konvektionstrockner), vor dem Primerauftrag 7. Dabei wird jede einzelne Platte von dem NIR-Detektor online gemessen, ohne dabei die Produktion zu unterbrechen. Durch das Bewegen des Detektors quer zur Produktionsrichtung ist es auch möglich über die gesamte Produktionsbreite die Weißauftragsmenge zu messen, was bei dem Auswiegen während der Produktion nicht der Fall ist. Somit bittet die NIR-Messung ein zerstörungsfreies kontinuierliches Messverfahren zur Bestimmung der Auftragsmenge an Grundierung und ermöglicht ein sofortiges Eingreifen in den Prozessablauf.

## Patentansprüche

1. Verfahren zur Bestimmung der Menge einer auf mindestens einer Trägerplatte aufgetragenen pigmentierten Schicht
umfassend die Schritte
- Aufnehmen von mindestens einem NIR-Spektrum der auf der mindestens einen Trägerplatte aufgetragenen pigmentierten Schicht unter Verwendung von mindestens einem NIR-Detektor in einem Wellenlängenbereich zwischen 500 nm und 2500 nm, bevorzugt zwischen 700 nm und 2000 nm, insbesondere bevorzugt zwischen 900nm und 1700 nm;
- Bestimmen der Auftragsmenge der pigmentierten Schicht durch Vergleich des für die zu vermessende Auftragsmenge der pigmentierten Schicht ermittelten NIR-Spektrums mit mindestens einem für mindestens eine Referenzprobe mit bekannter Auftragsmenge an pigmentierter Schicht ermittelten NIR-Spektrums mittels einer multivariaten Datenanalyse (MDA),
- wobei das mindestens eine für die mindestens eine Referenzprobe ermittelte NIR-Spektrum mit bekannter Auftragsmenge an pigmentierter Schicht unter Verwendung desselben NIR-Detektors in einem Wellenlängenbereich zwischen 500 nm und 2500 nm, bevorzugt zwischen 700 nm und 2000 nm, insbesondere bevorzugt zwischen 900 nm und 1700 nm vorher bestimmt wurde.

2. Verfahren nach Anspruch 1, **dadurch gekennzeichnet, dass** die mindestens eine pigmentierte Schicht mindestens eine Grundierungsschicht umfasst.

3. Verfahren nach Anspruch 2, **dadurch gekennzeichnet, dass** die Grundierungsschicht eine Zusammensetzung aus Kasein und anorganischen Pigmenten, insbesondere anorganischen Farbpigmenten umfasst.

4. Verfahren nach einem der vorhergehenden Ansprüche, **dadurch gekennzeichnet, dass** die Gesamtmenge der aufgetragenen pigmentierten Schicht zwischen 5 und 200 g/m², bevorzugt zwischen 20 und 150 g/m², insbesondere bevorzugt zwischen 30 und 100 g/m² beträgt.

5. Verfahren nach einem der vorhergehenden Ansprüche, **dadurch gekennzeichnet, dass** die pigmentierte Schicht aus mindestens einer, bevorzugt mindestens zwei, insbesondere bevorzugt mindestens vier nacheinander aufgetragenen Lagen besteht.

6. Verfahren nach Anspruch 5, **dadurch gekennzeichnet, dass** die Auftragsmenge zwischen den Lagen gleich oder verschieden ist.

7. Verfahren nach Anspruch 5 oder 6, **dadurch gekennzeichnet, dass** die Auftragsmenge einer Lage zwischen 1 bis 50 g/m², bevorzugt zwischen 2 bis 30 g/m², insbesondere bevorzugt zwischen 5 und 15 g/m² beträgt.

8. Verfahren nach einem der vorhergehenden Ansprüche, **dadurch gekennzeichnet, dass** die mindestens eine Trägerplatte eine Holzwerkstoffplatte, insbesondere eine mitteldichte Faser (MDF)-, hochdichte Faser (HDF)- oder Grobspan (OSB)- oder Sperrholzplatte ist, eine Zementfaserplatte und/oder Gipsfaserplatte, eine Magnesiumoxid-Platte, eine Holz-Kunststoff-Platte und/oder eine Kunststoffplatte ist.

9. Verfahren nach einem der vorhergehenden Ansprüche zur Bestimmung der Menge einer Grundierungsschicht auf einer Trägerplatte mit dem Schichtaufbau: Trägerplatte, mindestens eine Harzschicht und mindestens einer Lage Grundierungsschicht.

10. Verfahren nach einem der vorhergehenden Ansprüche, **dadurch gekennzeichnet, dass** die Referenzprobe mit bekannter Auftragsmenge der pigmentierten Schicht eine auf einer Trägerplatte aufgetragene pigmentierte Schicht umfasst, wobei Trägerplatte und pigmentierte Schicht der Referenzprobe gleichartig zu der zu vermessenden Probe aus Trägerplatte und pigmentierter Schicht sind.

11. Verfahren nach einem der vorhergehenden Ansprüche, **dadurch gekennzeichnet, dass** die Bestimmung der Menge der auf die Trägerplatte aufgetragenen pigmentierten Schicht nach dem Auftragen der pigmentierten Schicht und einem Trocknungsschritt in einem Trocknersegment unter Verwendung des mindestens einen NIR-Detektors erfolgt.

12. Verfahren nach einem der vorhergehenden Ansprüche, **dadurch gekennzeichnet, dass** der mindestens eine NIR-Detektor sich quer zur Laufrichtung der mit der pigmentierten Schicht versehenen Trägerplatten bewegt.

13. Verwendung von mindestens einem NIR-Detektor zur Bestimmung der Menge an auf einer Trägerplatte aufgetragenen pigmentierten Schicht gemäß einem Verfahren nach einem der Ansprüche 1 bis 12 in einer Vorrichtung zur Herstellung von Werkstoffplatten.

14. Vorrichtung zur Herstellung von Werkstoffplatten umfassend mindestens eine Vorrichtung zum Auftragen einer pigmentierten Schicht auf eine Trägerplatte, mindestens eine Vorrichtung zum Trocknen der pigmentierten Schicht, und mindestens einen NIR-Detektor zur Durchführung eines Verfahrens nach einem der Ansprüche 1 bis 12, wobei der mindestens eine NIR-Detektor in Verarbeitungsrichtung nach der Auftragsvorrichtung und der Trocknungsvorrichtung angeordnet ist.

15. Vorrichtung nach Anspruch 14, **gekennzeichnet durch** eine Vorrichtung zum Auftragen einer Harzschicht (Walzgrund) auf eine Trägerplatte und einer Vorrichtung zum Trocknen der Harzschicht, wobei beide Vorrichtungen in Verarbeitungsrichtung vor der Vorrichtung zum Auftragen der pigmentierten Schicht angeordnet sind.

## Geänderte Patentansprüche

### Geänderte Patentansprüche gemäss Regel 137(2) EPÜ.

1. Verfahren zur Bestimmung der Menge einer auf mindestens einer Holzwerkstoffplatte als Trägerplatte aufgetragenen pigmentierten Schicht
umfassend die Schritte
- Auftragen der pigmentierten Schicht als Flüssigauftrag auf die Holzwerkstoffplatte;
- Trocknen der aufgetragenen pigmentierten Schicht; und
- Aufnehmen von mindestens einem NIR-Spektrum der auf der mindestens einen Trägerplatte aufgetragenen pigmentierten Schicht unter Verwendung von mindestens einem NIR-Detektor in einem Wellenlängenbereich zwischen 500 nm und 2500 nm, bevorzugt zwischen 700 nm und 2000 nm, insbesondere bevorzugt zwischen 900nm und 1700 nm über den gesamten Spektralbereich;
- Bestimmen der Auftragsmenge der pigmentierten Schicht durch Vergleich des für die zu vermessende Auftragsmenge der pigmentierten Schicht über den gesamten Spektralbereiches ermittelten NIR-Spektrums mit mindestens einem für mindestens eine Referenzprobe mit bekannter Auftragsmenge an pigmentierter Schicht über den gesamten Spektralbereich ermittelten NIR-Spektrums mittels einer multivariaten Datenanalyse (MDA),
- wobei das mindestens eine für die mindestens eine Referenzprobe über den gesamten Spektralbereich ermittelte NIR-Spektrum mit bekannter Auftragsmenge an pigmentierter Schicht unter Verwendung desselben NIR-Detektors in einem Wellenlängenbereich zwischen 500 nm und 2500 nm, bevorzugt zwischen 700 nm und 2000 nm, insbesondere bevorzugt zwischen 900 nm und 1700 nm vorher bestimmt wurde.

2. Verfahren nach Anspruch 1, **dadurch gekennzeichnet, dass** die mindestens eine pigmentierte Schicht mindestens eine Grundierungsschicht umfasst.

3. Verfahren nach Anspruch 2, **dadurch gekennzeichnet, dass** die Grundierungsschicht eine Zusammensetzung aus Kasein und anorganischen Pigmenten, insbesondere anorganischen Farbpigmenten umfasst.

4. Verfahren nach einem der vorhergehenden Ansprüche, **dadurch gekennzeichnet, dass** die Gesamtmenge der aufgetragenen pigmentierten Schicht zwischen 5 und 200 g/m², bevorzugt zwischen 20 und 150 g/m², insbesondere bevorzugt zwischen 30 und 100 g/m² beträgt.

5. Verfahren nach einem der vorhergehenden Ansprüche, **dadurch gekennzeichnet, dass** die pigmentierte Schicht aus mindestens einer, bevorzugt mindestens zwei, insbesondere bevorzugt mindestens vier nacheinander aufgetragenen Lagen besteht.

6. Verfahren nach Anspruch 5, **dadurch gekennzeichnet, dass** die Auftragsmenge zwischen den Lagen gleich oder verschieden ist.

7. Verfahren nach Anspruch 5 oder 6, **dadurch gekennzeichnet, dass** die Auftragsmenge einer Lage zwischen 1 bis 50 g/m², bevorzugt zwischen 2 bis 30 g/m², insbesondere bevorzugt zwischen 5 und 15 g/m² beträgt.

8. Verfahren nach einem der vorhergehenden Ansprüche, **dadurch gekennzeichnet, dass** die mindestens eine Holzwerkstoffplatte, eine mitteldichte Faser (MDF)-, hochdichte Faser (HDF)- oder Grobspan (OSB)- oder Sperrholzplatte und/oder , eine Holz-Kunststoff-Platte ist.

9. Verfahren nach einem der vorhergehenden Ansprüche zur Bestimmung der Menge einer Grundierungsschicht auf einer Holzwerkstoffplatte als Trägerplatte mit dem Schichtaufbau: Holzwerkstoffplatte, mindestens eine Harzschicht und mindestens einer Lage Grundierungsschicht.

10. Verfahren nach einem der vorhergehenden Ansprüche, **dadurch gekennzeichnet, dass** die Referenzprobe mit bekannter Auftragsmenge der pigmentierten Schicht eine auf einer Holzwerkstoffplatte als Trägerplatte aufgetragene pigmentierte Schicht umfasst, wobei Holzwerkstoffplatte und pigmentierte Schicht der Referenzprobe gleichartig zu der zu vermessenden Probe aus Holzwerkstoffplatte und pigmentierter Schicht sind.

11. Verfahren nach einem der vorhergehenden Ansprüche, **dadurch gekennzeichnet, dass** die Bestimmung der Menge der auf die Holzwerkstoffplatte als Trägerplatte aufgetragenen pigmentierten Schicht nach dem Auftragen der pigmentierten Schicht und einem Trocknungsschritt in einem Trocknersegment unter Verwendung des mindestens einen NIR-Detektors erfolgt.

12. Verfahren nach einem der vorhergehenden Ansprüche, **dadurch gekennzeichnet, dass** der mindestens eine NIR-Detektor sich quer zur Laufrichtung der mit der pigmentierten Schicht versehenen Holzwerkstoffplatten als Trägerplatten bewegt.

13. Verwendung von mindestens einem NIR-Detektor zur Bestimmung der Menge an auf einer Holzwerkstoffplatte als Trägerplatte aufgetragenen pigmentierten Schicht gemäß einem Verfahren nach einem der Ansprüche 1 bis 12 in einer Vorrichtung zur Herstellung von Werkstoffplatten.

14. Vorrichtung zur Herstellung von Werkstoffplatten umfassend mindestens eine Vorrichtung zum Auftragen einer pigmentierten Schicht auf eine Holzwerkstoffplatte als Trägerplatte, mindestens eine Vorrichtung zum Trocknen der pigmentierten Schicht, und mindestens einen NIR-Detektor zur Durchführung eines Verfahrens nach einem der Ansprüche 1 bis 12, wobei der mindestens eine NIR-Detektor in Verarbeitungsrichtung nach der Auftragsvorrichtung und der Trocknungsvorrichtung angeordnet ist.

15. Vorrichtung nach Anspruch 14, **gekennzeichnet durch** eine Vorrichtung zum Auftragen einer Harzschicht (Walzgrund) auf eine Holzwerkstoffplatte als Trägerplatte und einer Vorrichtung zum Trocknen der Harzschicht, wobei beide Vorrichtungen in Verarbeitungsrichtung vor der Vorrichtung zum Auftragen der pigmentierten Schicht angeordnet sind.
